# EUROPEAN PATENT APPLICATION

(11) **EP 2 595 400 A1**
(43) Date of publication of application: **22.05.2013**
(21) Application number: 12191808.0
(22) Date of filing: 08.11.2012
(51) Int. Cl.: H04N 21/234, H04N 21/2343, H04L 29/06, H04N 21/6377, H04N 21/6437, H04N 21/8547, H04N 21/643, H04N 21/84

(54) **Method of digital content version switching and corresponding device**

(30) Priority: 16.11.2011 EP 11306499
(71) Applicant: Thomson Licensing, 92130 Issy-les-Moulineaux (FR)
(72) Inventor: Burklin, Helmut, 35000 RENNES (FR); Houdaille, Rémy, 35576 CESSON-SEVIGNE (FR)
(74) Representative: Lorette, Anne

(57) **Abstract**

The present invention relates to the field of management of digital content switching and in particular to the optimization of digital content version switching in order to ensure smooth switching between different versions of digital content during rendering. Different versions are for example: an uncensored version and a censored version, a cinema version and a TV-series adaptation version of a same digital content, a version with inserted publicity and a version without, a trailer version and a cinema version, different language-dubbed versions.

## Description

### 1. Field of invention.

The present invention relates to the field of optimization of digital content version switching during content rendering.

### 2. Technical background.

With the proliferation of digital content, for example via a 3GPP mobile telephone network, Internet, web-, IP- / TV / radio broadcast or Video-on-Demand distribution, users have access to a large choice of different digital content available through different transport media. A same digital content exists often in different versions. Different versions are for example: a complete version and a censored version, a TV-series version and a cinema version, a version with publicity and a version without, a trailer version and a full version, versions with different language dubbing, a version without and a version with actor/producer comments. A user may also have access to digital content on his mobile telephone and have the possibility to access the same digital content on his HD television at home.

A user may have different reasons to switch to a different version of a rendered content, while rendering. It is then cumbersome to position the read pointer correctly in the different version so that the rendering continues smoothly, and especially if the different versions have different time lines; e.g. a version without publicity of a digital content has a timeline running from 0 hour 0 minutes 0 seconds (or 0:00:00) to 1:25:30 (1 h 25m 30s), whereas a version with publicity has a different timeline running from 0h00m00s to 1 h36m56s. Often, the user must find the correct read point in the version to which he switches by manual read, fast forward and fast reverse actions.

With the current state of art it is not easy for a user to navigate comfortably between different versions of a 'same' digital content, nor is it easy for him to find different versions of a same digital content which could be interesting to him.

### 3. Summary of the invention.

The invention is related to find alternate versions of different content and to optimize switching between these alternate versions.

By digital content is meant in the context of the current invention audio, video, audio and video, text/document, combined or not with audio and video or images; such as MP3 audio file, radio broadcast, Internet broadcast, or language track of a video, TV broadcast, radio broadcast, on-demand video, audio or radio, videogame, or text document (for example for an e-book reader). By different digital content version is meant different versions of what a user considers as being a same digital content. Examples of different versions of a 'same' digital content are: a German language dubbed version of a movie, a French language dubbed version of the same movie - the video content is the same for these versions; a TV-series version of a cinema production, the TV-series version being cut in different episodes, each episode comprising an introduction part with a flash-back of what happened in the previous episodes - but still the story line is the same; different language versions of a same video game - the video content is the same however text is different; a reduced resolution version of digital content for rendering on low-resolution screen of a hand-held device - the video content is the same even if the resolution is different, and a high resolution version of an SD version of digital content for rendering on a HD television; a censored version, vs. an uncensored version; a commented version vs. an uncommented version. These examples are meant for illustrative purposes and are not meant to limit the scope of the invention.

The discussed advantages and other advantages not mentioned here, that make the device and method of the invention advantageously well suited for optimization of digital content version switching, will become clear through the detailed description of the invention that follows.

In order to optimize digital content version switching, the invention proposes a method comprising a step of rendering of a first version of digital content; a step of transmission of a request to seek a corresponding rendering point in at least one alternate digital content version that is an alternate version of the first version, the request comprising information representative of a rendering point in the first version and an identifier of the first version, a step of reception of an identifier of the at least one alternate version and of associated information representative of the corresponding rendering point in the at least one alternate version; and a step of transmission of a request to receive at least one component of a chosen alternate version, chosen from the at least one alternate digital content version of which an identifier is received in the reception step, and rendering of the at least one component of the chosen alternate version at the corresponding rendering point in replacement of rendering of at least one component of the first version.

According to a variant embodiment of the invention, the request to seek a corresponding rendering point in at least one alternate digital content version that is an alternate version of the first version further comprises information representative of a type of the identifier of the first version.

According to a variant embodiment of the invention, the information representative of the rendering point in the first version is a time code.

According to a variant embodiment of the invention, the information representative of a rendering point in the first version is metadata.

According to a variant embodiment of the invention, the identifier of the first version is an extracted sequence of the first version of digital content.

According to a variant embodiment of the invention, the request to seek a corresponding rendering point in at least one alternate digital content version that is an alternate version of the first version further comprises information representative of a type of alternate version desired.

According to a variant embodiment of the invention, the request to seek a corresponding rendering point in at least one alternate digital content version that is an alternate version of the first version further comprises at least one identifier of an alternate version for which a corresponding rendering point is requested.

The invention also concerns a device for optimization of digital content version switching, the device comprising means for rendering of a first version of digital content; means for transmission of a request to seek a corresponding rendering point in at least one alternate digital content version that is an alternate version of the first version, the request comprising information representative of a rendering point in the first version and an identifier of the first version; means for reception of an identifier of the at least one alternate version and of associated information representative of the corresponding rendering point in the at least one alternate version; means for transmission of a request to receive (311) at least one component of a chosen alternate version, chosen from the at least one alternate digital content version of which an identifier is received by the means for reception, and the means for rendering rendering the at least one component of the chosen alternate version at the corresponding rendering point in replacement of rendering of at least one component of the first version.

### 4. List of figures.

More advantages of the invention will appear through the description of particular, non-restricting embodiments of the invention. The embodiments will be described with reference to the following figures:
**Figure 1** illustrates a cinema digital content that is adapted to a TV-series that is cut into different episodes.
**Figure 2** shows an uncensored digital content and a censored version of the same content.
**Figure 3** shows a sequence diagram illustrating messages that are exchanged between devices implementing the invention, according to a variant embodiment.
**Figure 4** shows an example of a device implementing the invention.
**Figure 5** shows a flow chart of the method of the invention.

### 5. Detailed description of the invention.

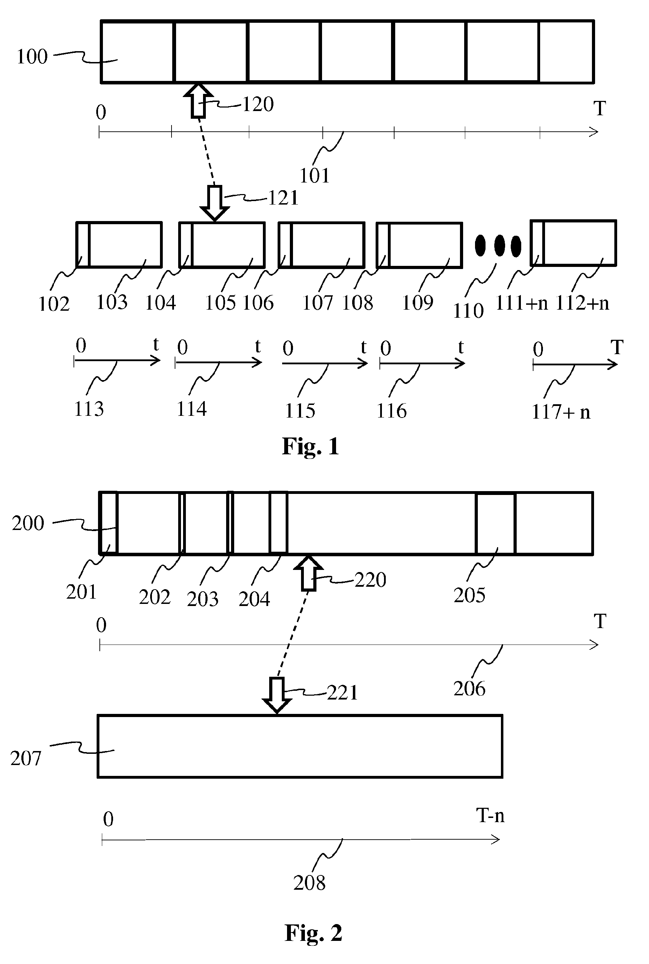

**Figure 1** illustrates a cinema digital content that is cut into TV-episodes.

The rectangle 100 represents the cinema version of the digital content, with an associated timeline 101.

Rectangles 102-103, 104-105, 106-107, 108-109, 110 and 111+n - 112+n represents a TV-series adaptation of the cinema version. Each individual TV-episode has a separate and individual associated timeline respectively 113, 114, 115, 116 and 117+n. Dots 110 represent n other episodes. The cinema version 100 is thus cut into 5 + n episodes, each episode has its own introduction part respectively 102, 104, 106, 108, 111 +n and main part respectively 103, 105, 107, 109, 112+n. The main parts correspond to consecutive parts chosen and copied from the cinema version 100. The introduction parts correspond to images or parts copied from the original digital content 100. Arrows 120 and 121 represent corresponding rendering points in respectively cinema version 100 and TV-series adaptation 102-112+n.

**Figure 2** shows digital content that is censored, for example where scenes with explicit violence are removed. An uncensored digital content version is represented by rectangle 200. Zones 201-205 inside rectangle 200 represent images or series of images of the uncensored digital content version that are selected to be removed from the censored version. The uncensored version of digital content has an associated timeline 206. Zone 207 represents the censored digital content version, with its own associated timeline 208. Arrows 220 and 221 represent rendering points in respectively uncensored digital content version 200 and censored digital content version 207.

As can be seen from figures 1 and 2, there is no easy mapping between the rendering points of the different versions of the digital content, for example, for figure 1 between rendering points 120 and 121, or for figure 2, between rendering points 220 and 221. This is because each version of digital content has its own timeline and a match cannot be simply done based on an exact correspondence between time codes because their time base is different. Switching between digital content without generating undesired sequence jumps during rendering is therefore complicated; for the example given in figure 1: suppose that a user watches the TV-adaptation version 102-112+n but that he wants to switch to a corresponding rendering point of the alternate cinema version 100 in replacement of the TV-adaptation version. Doing this manually, the user needs to remember where the rendering of the TV-series was when he wanted to switch (for example, he mentally memorizes images of a particular sequence), request the cinema version of the same digital content (supposing that he knows where to find that version), start to render the cinema version from the beginning and skipping forward to the 'right place' in by means of repeated next chapter or fast forward actions, the 'right place' meaning a rendering point that represents a sequence that follows the sequence of the first digital content version that was interrupted upon reception of the switch command. Evidently, executing such actions is cumbersome, the result is only approximate and it thus does not incite the user to initiate such a switch action.

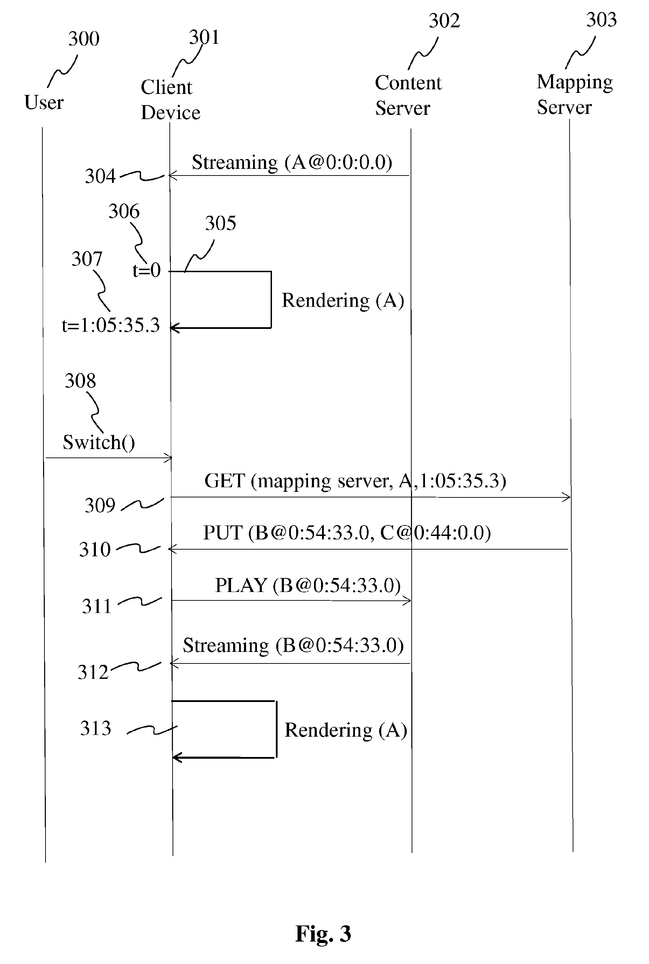

**Figure 3** shows a sequence diagram illustrating messages exchanged according to a particular embodiment of the invention. The vertical lines represent a user 300, a Client Device 301, a Content Server 302, and a Mapping Server 303. The role of the Content Server 302 is to provide the digital content to the Client Device 301. The role of the Mapping Server 303 is to provide the Client Device 301 with information representative of a corresponding rendering point in an alternate version of the first version.

The sequence diagram starts with a transmission 304 of a first version of digital content 'A' from the Content Server 302 to Client Device 301. Digital content 'A' is for example the TV-series version [102]-[112+n] of Figure 1. Arrow 305 illustrates rendering of the first version of digital content by the Client Device 301. The rendering starts at a rendering point related to a timeline of the first digital content version that is according to the example embodiment in the form of a time code (306: t=0, meaning the beginning; 307: t=1:05:35.3, meaning 1 hour, 5 minutes, 35 seconds and 300 milliseconds). At t=1:05:35.3, the user 300 instructs the Client Device 301 to switch to an alternate or different digital content version (arrow 308). The Client Device 301 then transmits a request 309 to seek a corresponding rendering point in at least one alternate digital content version that is an alternate version of the first version; the request comprising information representative of a rendering point in the first version and an identifier of the first version. This means that the Client Device 301 wishes to the Mapping Server 303 to seek a corresponding rendering point in an alternate version of version 'A' that corresponds to the rendering point in version 'A' that was rendered upon the moment of reception of the switch command 308. According to this example, the Mapping Server 303 has found two alternate versions, a version 'B' and 'C', and transmits to the Client Device 301 in a reply 310 the corresponding digital content identifiers of the two alternate versions (alternate versions of content 'A'), as well as, for each of the alternate versions, associated information representative of the corresponding rendering points (that refer to a rendering point in content 'B' and respectively 'C' that corresponds to the specific rendering point in content 'A'). This reply 310 is received by the Client Device 301. The Client Device 301 now chooses from among the alternate versions identifiers received (in case the Mapping Device 303 only returns one alternate version, there is evidently no choice), requests (311) the chosen alternate version from the Content Server 302, and renders (313) the chosen alternate version at the corresponding rendering point when it receives it (312), in replacement of rendering of the first version.

According to a variant embodiment, and alternatively to seeking an 'exact' corresponding rendering point in an alternate version, the Mapping Server 303, when replying to the Client Device 301, transmits corresponding rendering points that are offset with regard to rendering point information that was transmitted to the Mapping Server 303 by the Client Device 301. Such offset allows or example to return a number of seconds in time, or to get some overlapping content in order to obtain a good synchronization when switching content version; synchronization is for example desired when an alternate audio version is requested for an audio/video content, so that the alternate audio version seamlessly replaces a current audio version, and when an alternate resolution version of a video content is requested, so that the alternate resolution video seamlessly replaces a current resolution video. The content overlap allows to find the 'right moment' for switching by the client device, for example on an uncompressed audio or video frame (e.g. I-frame for MPEG encoded video, that does not depend on other video frames to be decoded).

According to the embodiment of the invention illustrated by means of the sequence diagram of Figure 3, the digital content is provided to the Client Device 301 through streaming, i.e. as a continuous flow of data packets. The streaming example, particularly suited for providing audio/video type digital content over IP (Internet Protocol), is used as a non-limitative illustration of a way to provide digital content to a client device such as Client Device 301. An example of another means of providing content to a client device is through file fetch or reception as in contrast to streaming. These examples are not meant to be limitative.

A Client Device 301 is for example a Set Top Box (STB), a personal computer (PC), a digital television (DTV), a mobile telephone, a tablet-PC, notebook PC, or an e-book reader. Such a Client Device 301 receives digital content and optionally renders it, e.g. in case the Client Device 301 is a DTV it can both receive digital content and render it. In case the Client Device 301 is an STB, it receives digital content and provides an output signal that can be rendered by another device (such as by the previously mentioned DTV). Alternatively, the Client Device 301 is a hybrid device having multiple interfaces, for example having a first network interface allowing access to the Mapping Server 303 via the Internet, and a DVB-T (Digital Video Broadcasting - Terrestrial) interface for reception of digital content received via a terrestrial signal reception. Alternatively, the Client Device 301 is an e-book reader, receiving text type documents, where the invention enables, as an example, to switch seamlessly to a different text language when rendering the text of a novel; these examples are not meant to be limitative.

The Digital content Server 302 and the Mapping Server 303 are for example implemented by dedicated high performance servers that are accessible via a dedicated network, or by servers accessible through the Internet, or by server applications running on a PC in the home network that also connects the Client Device 301, or by a server application running on the Client Device 301 or on another device accessible by the Client Device 301, or a mix of these. Alternatively, the Content Server 302 is a broadcast server that provides terrestrial, cable, Internet or satellite broadcast digital content, or merely data storage space accessible to the Client Device 301, from which the Client Device 301 fetches the digital content itself, such as a disc drive, or a DVD (Digital Versatile Disc)-recorder, or a PVR (Personal Video Recorder); these examples are not meant to be limitative.

The time code format discussed in fig. 1 is an example of time code type identifiers that can be used in the context of the invention. Any type of time code can be used in the context of the invention, for example NPT (Network Time Protocol) or SMPTE (Society of Motion Picture and Television Engineers) time codes, as long as they can identify a rendering point in a digital content. These examples are not meant to be limitative.

In Figure 3, it is the user 300 that initiates the switch action. Again, this is a mere example and is not meant to be limitative. Alternatively, it is not the user that initiates the switch action, but the Client Device 301 itself without intervention from the user 300, or another device such as any of the other devices of fig. 3 (Digital content Server 302, Mapping Server 303), or any other device, or an application program running on any of the mentioned devices including the Client Device. This can be advantageous, for example in order to automatically operate a version switch because of reasons such as: automatic detection of/ request for availability of an alternate version that corresponds better to user preferences than a currently rendered first version, automatic switch from a first uncensored version to an alternate censored version, automatic switch to alternate version due to a temporary unavailability of the first version.

According to fig.3, the first identifier is a time code. According to a variant embodiment, the first identifier is metadata. An example of metadata is a formalized descriptor of a specific scene in the first digital content, chapter identification, or a hash code of a specific sequence. This variant is in contrast with the random access possibility that the time code variant offers, but provides the advantage, for example when switching from a first TV-series version to an alternate cinema version, to start the rendering of the alternate cinema version at the chapter that corresponds to the moment of interruption of the first TV-series version upon reception of the switch command. According to yet another variant embodiment, the first identifier is an extracted sequence of the first version. An extracted sequence is a fragment of content, e.g. an audio fragment or a video fragment, or a fragment combining audio and video, that is copied from an audio content, video content or audio/video content; for example, a sequence of audio extracted from an audio track, such as a fragment of a song, or a sequence of images of a movie. The Mapping Server 303 then seeks the corresponding sequence in an alternate version.

According to yet another variant embodiment, the corresponding identifier returned by the Mapping Server 303 is also according to any of the mentioned types (time code, metadata, sequence of the first version). The above mentioned variant embodiments can be combined, for example, the first identifier is a time code, whereas the returned corresponding identifier is metadata.

The versions of the digital content i.e. first version and alternate version(s) are, according to the invention, identified uniquely by a version identifier. Such unique version identifier is for example a CRID (Digital content Reference IDentifier) according to the TV-Anytime forum. The TV-Anytime CRID identifies unambiguously a piece of digital content. Other examples of unique version identifiers are URL (Uniform Resource Locator), ISAN (International Standard Audiovisual Number), ISSN (International Standard Serial Number) or ISBN (International Standard Book Number). For audio/video digital content, the ISAN is particularly well suited. The ISAN is a 96 bits number with three fields, a 48-bit wide field characterizing an audio/visual work, for example movie or TV-series, a 16-bit part characterizing for example a specific episode of a TV-series, and a 32-bit part characterizing a specific version, for example used to distinguish different language dubbing versions. In print the ISAN is usually formatted as a hexadecimal number with structuring hyphens and redundancy check characters, for example ISAN 0001-F54C-302A-8D98-X-0000-0121-T, meaning work 0001F54C302A, part number 8D98, version 00000121, the version number being optional. Using the ISAN example, the Mapping Server 303 can return a list of corresponding identifiers of the first version of the digital content, all identifiers differentiating only in the 32-bit part characterizing a specific version.

Figure 3 is illustrated with GET/PUT Type messages. Again, this is only for illustrative purposes and not meant to be restrictive. Other examples of exchanges are for example according to the HTTP protocol. In such a case and using the previously discussed ISAN example, request 309 can be represented as:
GET http://www.mappingserver.com?0001-F54C-302A-8D98-X-0000-0121-T&npt=1:05:35.3- HTTP/1.0

Indicating a http version 1.0 get type request for reception of at least one corresponding identifier of an alternate version of digital content of the first version 0001-F54C-302A-8D98-X-0000-0121-T associated rendering point in the alternate version that is representative for a rendering point in the first version npt=1:05:35.3 is addressed to a Mapping Server 303 www.mappingserver.com, the request comprising the identifier of the first version (0001-F54C-302A-8D98-X-0000-0121-T) and information representative of the rendering point in the first version (npt=1:05:35.3).

The Mapping Server 303 answers with an answer 310:
HTTP/1.0 200 OK
0001-F54C-302A-8D98-X-0000-0017-A, 0001-F54C-302A-8D99-Z-0000-0123-N
npt=1:06:25.5-, npt=1:01:33.0-

Meaning that the Mapping Server 303 understood the request (HTTP/1.0 200 OK) and gives its response, namely it transmits at least one corresponding identifier of an alternate content (0001-F54C-302A-8D98-X-0000-0017-A and 0001-F54C-302A-8D99-Z-0000-0123-N) and of an associated rendering point in that alternate content (npt=1:06:25.5, npt=1:01:33.0-) to the Client Device 301. The Client Device 301 then transmits a request for reception 311 of an alternate version chosen from at least one corresponding digital content version identifier that it received from the Mapping Server 303:
PLAY RTSP://www.contentserver.com/0001-F54C-302A-8D98-X-0000-0017-A RTSP 1.0
Range: npt=1:06:25.5

The Content Server 302 replies in a reply 312:
RTSP/1.0 200 OK

And the Client Device 301 renders the content received from the Content Server 302.

According to a variant embodiment, the request 309 further comprises information representative of a type of said first identifier. Using the previous example, the information representative of a type of said first identifier can for example be implemented as the word 'ISAN' preceding the first identifier. This is advantageous for a Mapping Server to remove any ambiguity of the type of the first identifier. However, in case of a default type, the type information is optionally not present in the request.

Whatever the type of information representative of the rendering point in the first version, the Mapping Server 303 will try to find an alternate version and associate corresponding rendering point in the alternate version.

Alternatively, the request 309 comprises one or more supplementary digital content version identifiers that indicate alternate versions. In such a case, the Mapping Server 303 is requested to find corresponding rendering points in these alternate versions, and the answer 310 of the mapping server will comprise information representative of the rendering points that are associated to the alternate versions. Then, the response 310 of the Mapping Server 303 does not necessarily comprise any corresponding digital content version identifier, because it is sufficient for the Client Device 301 to receive the information representative of the corresponding rendering points.

Another advantage of the invention is illustrated by the following use case, where the version switch concerns the audio track of a digital content that is not available locally (meaning locally available by the Client Device, for example on a local storage device), the digital content comprising an audio track and a video track: a user watches language version 'A' of digital content 'Y' (i.e. 'Y_{A}') and wants to switch to language version 'C' of the same digital content (i.e. 'Y_{C}'). In such a case, the request 309 to seek a corresponding rendering point in at least one alternate digital content version that is an alternate version of said first version concerns an alternate version of content 'Y' in language version 'A' (supposing that the different language versions of content 'Y' are uniquely defined by a version identifier for example as 'Y_{A}', 'Y_{B}', 'Y_{C}'). The Client Device 301 receives (arrow 310) the identifiers of the alternate versions ('Y_{B}' and 'Y_{C}'), chooses one of those ('Y_{C}' for example, according to the language version that he wishes) and because it already has the video component, then requests only the audio component from the Content Server 302 in a request 311, i.e. a request to receive at least a component (audio track 'C') of an alternate version ('Y_{C}') chosen from the at least one alternate digital content version ('Y_{B}', 'Y_{C}'). Upon reception of the audio component (audio track 'C'), the audio component of the alternate version ('Y_{C}') replaces the audio component of the first version ('Y_{A}') and the Client Device continues rendering the first digital content ('Y') but with the alternate audio component ('C') as a replacement of the audio component ('A') of the first version ('Y_{A}').

To ease the choice of the Client Device between different alternate versions returned by the Mapping Server, the Mapping Server can, in its reply 310 and according to a variant embodiment, associate to each reply 310 a description for each alternate version. This description then comprises information such as a user-readable description (such as 'English Version') and/or an ISO-language descriptor (e.g. 'ENG' or 'FRE'). To ease the choice and identification of components of the alternate version(s) by the Client Device, the description can further comprise identifiers of the components of the alternate versions (e.g. audio track = PID 300, video track = PID 200; PID stands for 'Packet ID', an acronym frequently used for identification of the components of an MPEG encoded version and identifies an Elementary Stream component).

As a further optimization, the request to receive (311) at least one component of an alternate version, chosen from the at least one alternate digital content version of which an identifier is received in the reception (310) step, further comprises the associated information representative of the corresponding rendering point in the alternate version that was received in the reception step. This is advantageous in a streaming environment, where the Client Device 301, in addition to specifying an identifier of the content to the Content Server, also specifies the point at which it wants to receive the content, i.e. at the corresponding rendering point.

How the Mapping Server seeks a corresponding rendering point in an alternate version is not within the scope of this invention. Prior art solutions exist such as calculation based on time codes, pattern recognition or a combination of these or any other means. Having a Mapping Server that is external to the Client Device is advantageous because it can more easily provided with enough processing power to serve requests from multiple clients and to even solve 'difficult' cases requiring appropriate processing power.

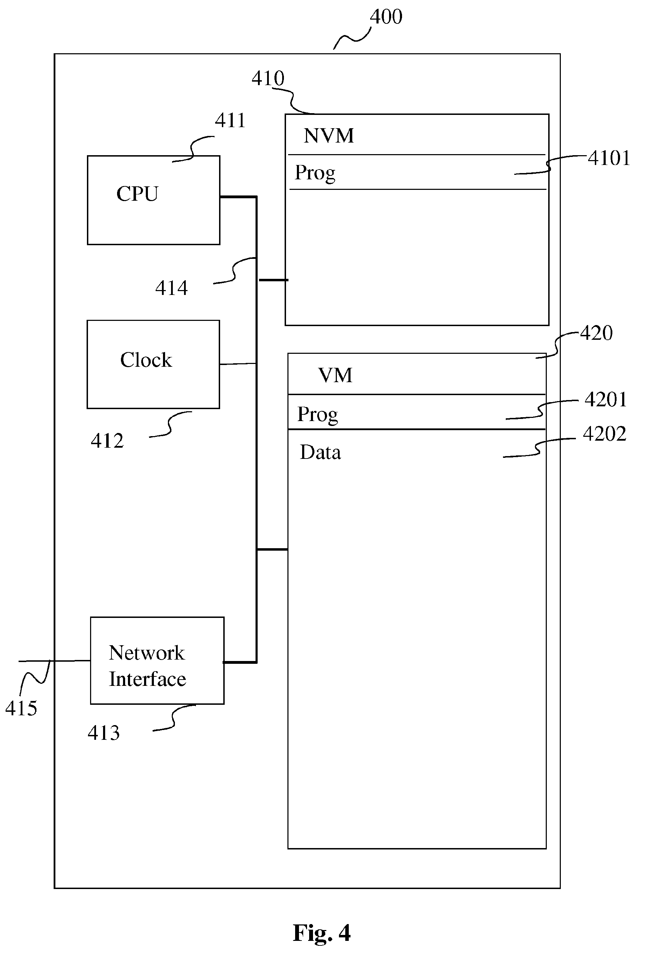

**Figure 4** shows an example of a device implementing the invention. The device 400 comprises the following components, interconnected by a digital data- and address bus 414:
- a processing unit 411 (or CPU for Central Processing Unit);
- a non-volatile memory NVM 410 ;
- a volatile memory VM 420 ;
- a clock unit 412, providing a reference clock signal for synchronization of operations between the components of the device 400 and for other timing purposes;
- a network interface 413, for interconnection of device 400 to other devices connected in a network via connection 415.

It is noted that the word "register" used in the description of memories 410 and 420 designates in each of the mentioned memories, a low-capacity memory zone capable of storing some binary data, as well as a high-capacity memory zone, capable of storing an executable program, or a whole data set.

Processing unit 411 can be implemented as a microprocessor, a custom chip, a dedicated (micro-) controller, and so on. Non-volatile memory NVM 410 can be implemented in any form of non-volatile memory, such as a hard disk, non-volatile random-access memory, EPROM (Erasable Programmable ROM), and so on. The Non-volatile memory NVM 410 comprises notably a register 4201 that holds a program representing an executable program comprising the method according to the invention. When powered up, the processing unit 411 loads the instructions comprised in NVM register 4101, copies them to VM register 4201, and executes them.

The VM memory 420 comprises notably:
- a register 4201 comprising a copy of the program 'prog' of NVM register 4101 ;
- a register 4202 comprising read/write data that is used during the execution of the method of the invention.

A device such as device 400 is an example of a device that is suited for implementing the method of the invention.

Via the network interface 413, the first or alternate versions of digital content can be rendered. Alternatively, the device 400 comprises an additional dedicated output for digital content, such as an HDMI type interface (High Definition Multmedia Interface).

Via a same network interface 413 or alternatively via a dedicated input device (such as a remote control receiver) the device 400 receives a switch command to switch version (or, alternatively, from an application program running on the device 400).

Via the network interface 413, the device 400 communicates with the Content Server 302 and the Mapping Server 303 (for example, for transmission of requests 309, 311, and for reception of 304, 310, and 312 of figure 3.

Other device architectures than illustrated by fig 4 are possible and compatible with the method of the invention. Notably, according to variant embodiments, the invention is implemented as a pure hardware implementation, for example in the form of a dedicated component (for example in an ASIC, FPGA or VLSI, respectively meaning Application Specific Integrated Circuit, Field-Programmable Gate Array and Very Large Scale Integration), or in the form of multiple electronic components integrated in a device or in the form of a mix of hardware and software components, for example as a dedicated electronic card in a computer.

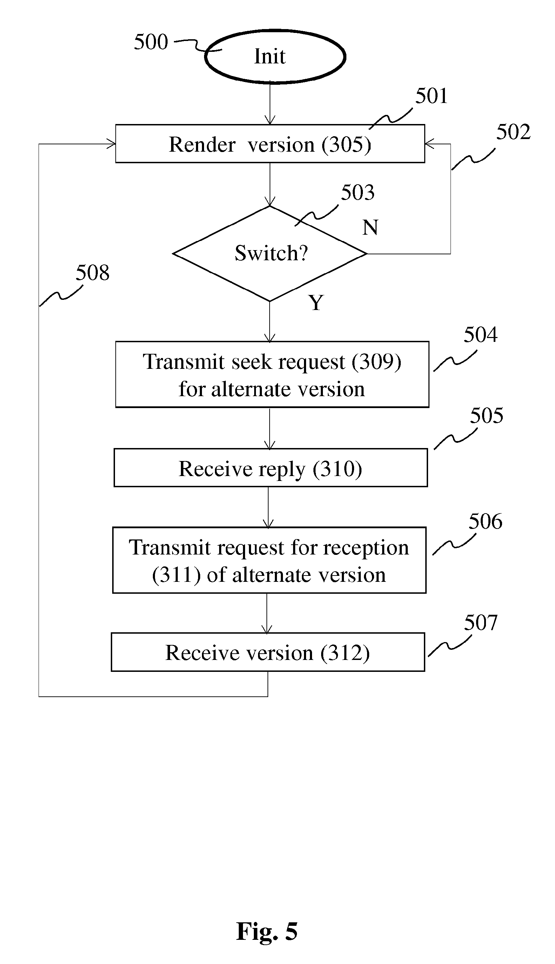

**Figure 5** illustrates a flow chart of the method of the invention.

In a first initialization step 500, variables are initialized for the functioning of the method. When the method is implemented in a device such as device 400 of figure 4, this may comprise copying of data from non-volatile memory to volatile memory and initialization of memory. In a next step 501, a first version is rendered. In decisional step 503, it is determined if a switch command is received (such as switch command 308 of figure 3). If such a command is not received, the rendering continues which is illustrated by arrow 502. If such a command is however received, step 504 is done, in which a request is transmitted to a mapping server for a corresponding rendering point in one or more alternate versions of a first version (such as the version rendered in step 305 of fig. 3), or alternatively, of another version of digital content than the version rendered. Then, in a step 505, a reply is received from the Mapping Server ( such as reply 310 of figure 3) in which the Mapping Server returns one or more identifiers of alternate versions, together with, for each identifier of an alternate version, information representative of a corresponding rendering point in the alternate version that corresponds to the rendering point that was provided to the Mapping Server in step 504. Then in a step 506, the device 400 chooses an alternate version from the versions proposed by the mapping server (or no choice if the mapping server only proposes one alternate version), and transmits a request for reception of that version to a content server (such as content server 302 of figure 3). When it receives that version in a step 507, it renders it in step 501 at the corresponding rendering point (arrow 508 illustrates the return to rendering step 501), in replacement of the first version.

## Claims

1. Method of digital content version switching, **characterized in that** it comprises the following steps:
- rendering (305) of a first version of digital content;
- transmission of a request (309) to seek a corresponding rendering point in at least one alternate digital content version that is an alternate version of said first version, said request comprising information representative of a rendering point in said first version and an identifier of said first version;
- reception (310) of an identifier of said at least one alternate version and of associated information representative of said corresponding rendering point in said at least one alternate version;
- transmission of a request to receive (311) at least one component of a chosen alternate version, chosen from said at least one alternate digital content version of which an identifier is received in the reception (310) step, and rendering (313) of said at least one component of said chosen alternate version at said corresponding rendering point in replacement of rendering of at least one component of said first version.

2. Method according to Claim 1, **characterized in that** said request (309) to seek a corresponding rendering point in at least one alternate digital content version that is an alternate version of said first version further comprises information representative of a type of said identifier of said first version.

3. Method according to Claim 1 or 2, **characterized in that** said information representative of said rendering point in said first version is a time code.

4. Method according to Claim 1 or 2, **characterized in that** said information representative of a rendering point in said first version is metadata.

5. Method according to Claim 1 or 2, **characterized in that** said identifier of said first version is an extracted sequence of said first version of digital content.

6. Method according to any of Claims 1 to 5, **characterized in that** said request (309) to seek a corresponding rendering point in at least one alternate digital content version that is an alternate version of said first version further comprises information representative of a type of alternate version desired.

7. Method according to any of Claims 1 to 5, **characterized in that** said request (309) to seek a corresponding rendering point in at least one alternate digital content version that is an alternate version of said first version further comprises at least one identifier of an alternate version for which a corresponding rendering point is requested.

8. A client device (301) for digital content version switching, the client device comprising:
- means for rendering of a first version of digital content;
- means for transmission of a request to seek a corresponding rendering point in at least one alternate digital content version that is an alternate version of said first version, said request comprising information representative of a rendering point in said first version and an identifier of said first version;
- means for reception of an identifier of said at least one alternate version and of associated information representative of said corresponding rendering point in said at least one alternate version;
- means for transmission of a request to receive (311) at least one component of a chosen alternate version, chosen from said at least one alternate digital content version of which an identifier is received by the means for reception, and the means for rendering rendering said at least one component of said chosen alternate version at said corresponding rendering point in replacement of rendering of at least one component of said first version.
